Europäisches Patentamt

European Patent Office

Office européen des brevets

(11) Publication number: **0 180 444**
**B1**

# (12) EUROPEAN PATENT SPECIFICATION

(45) Date of publication of patent specification: **17.01.90**

(51) Int. Cl.⁵: **C 08 F 8/50**

(21) Application number: **85307778.2**

(22) Date of filing: **28.10.85**

(54) **Producing low molecular weight polymer.**

(30) Priority: **29.10.84 US 665946**

(43) Date of publication of application:
**07.05.86 Bulletin 86/19**

(45) Publication of the grant of the patent:
**17.01.90 Bulletin 90/03**

(84) Designated Contracting States:
**BE DE FR GB IT**

(56) References cited:
**EP-A-0 111 391**
**FR-A-1 547 299**
**FR-A-2 181 994**
**FR-A-2 251 576**
**US-A-3 953 655**

(73) Proprietor: **POLYSAR LIMITED**
**Sarnia Ontario N7T 7M2 (CA)**

(72) Inventor: **Edwards, Douglas Cameron**
**1731 Rutherglen Close**
**Sarnia Ontario (CA)**
Inventor: **Padliya, Dilipkumar**
**677 Amesbury Court**
**Sarnia Ontario (CA)**

(74) Representative: **Perry, Robert Edward et al**
**GILL JENNINGS & EVERY 53-64 Chancery Lane**
**London WC2A 1HN (GB)**

Courier Press, Leamington Spa, England.

## Description

This invention is directed to a process for the production of low molecular weight polymer by reaction in an extruder of a high molecular weight polymer with an oxygen-containing gas.

Much work has been published in the academic literature on the degradation of polyisobutylene in solution because the polyisobutylene molecule is very convenient to work with. The purpose of such work has generally been to attempt to identify what actually happens during degradation and the kinetics associated with the thus-identified mechanism.

FR—A—2007125, according to Chemical Abstracts 1970, volume 73, 131693h, describes the thermal degradation of high molecular weight polyisobutylene to a reduced molecular weight polymer in an extruder, wherein shear forces are applied in three degradation zones connected by transfer zones, the first degradation zone being at 280°C, the second degradation zone being at 313°C and the third zone being at 310°C.

DE—A—3008389, according to Chemical Abstracts 1982, Volume 96, 86524r, describes the prevention of carbon formation during the thermal degradation of polyisobutylene at temperatures up to about 350°C by a process as described in FR—A—2007125, by the addition of 100 ppm of tocopherol.

EP—A—0111391 discloses the treatment (in the absence of ozone, as a compartive experiment) of an isobutylene - isoprene polymer in an extruder, at 176°C.

We have now found that the degradation of isobutylene-conjugated diolefin polymers may advantageously be conducted at low temperatures by means of an oxidative rather than a thermal process, thereby eliminating problems of carbon formation and providing improved process control and control of the molecular weight of the product of the process.

Accordingly, the present invention is directed to a process for the production of a low molecular weight isobutylene polymer which comprises feeding to an extruder an isobutylene-conjugated diolefin copolymer containing no more than 100 ppm of an antioxidant-type component and having a molecular weight $M_w$ of from $350 \times 10^3$ to $700 \times 10^3$ and reacting said polymer with gas within said extruder to produce said low molecular weight polymer having a molecular weight $M_w$ of from $25 \times 10^3$ to $150 \times 10^3$, characterized in that:

(a) said extruder consists essentially of a twin screw extruder mixer device capable of providing a high degree of interfacial contact between the viscous polymeric material and a gaseous phase and having a feed section, a reaction section and a volatiles removal section, and being equipped with a gas feed port attached to and communicating with the interior of the extruder barrel at a point closely adjacent to the junction of the feed section and the reaction section, and being equipped with a gas vent port attached to and communicating with the interior of the extruder barrel at a point closely adjacent to the junction of the reaction section and the volatiles removal section and a second vent port also connected to a vacuum means attached to and communicating with the interior of said extruder barrel at a point within the volatiles removal section, the screws within the reaction section being equipped with shearing flights and within the feed section and volatiles removal section being equipped with mixing and conveying flights,

(b) said polymer is conveyed through said extruder by said screws and is reacted in at least said reaction section with gas supplied from said gas feed port, gas is removed through said gas vent port and any volatile materials are removed through said second vent port,

(c) said extruder is maintained at a temperature of from 150° to 250°C,

(d) the residence time for said polymer in said extruder from said gas feed port to said gas vent port is from 0.5 to 3 minutes, and

(e) the gas supplied to said gas feed port contains 5 to 30 per cent by volume and also one or more chemically inert gases at a pressure of from 108 to 343 kPa (1.1 to 3.5 kg/cm²) at a rate in litres/hour of from about 10 to about 500 times the polymer throughput rate in kg/hour.

Suitable isobutylene-conjugated diolefin copolymers for use in the present invention are the copolymers of isobutylene and $C_4$—$C_6$ conjugated diolefins. Such copolymers contain from 95 to 99.5 mole per cent of isobutylene and from 0.5 to 5 mole per cent of $C_4$—$C_6$ conjugated diolefin. Suitable such conjugated diolefins are isoprene, 2,3 - dimethylbutadiene and piperylene. The preferred such conjugated diolefin is isoprene and the preferred copolymer contains from 98 to 99 mole per cent of isobutylene and from 1 to 2 mole per cent of isoprene. Such copolymers should contain essentially no antioxidant-type component: antioxidants such as amine, phenol, phosphite and other types are well known in the industry and the presence of more than 50 to 100 parts per million of such antioxidant-type components significantly interfere with the process of the present invention.

The isobutylene-conjugated diolefin copolymers supplied to the process of the present invention will have a molecular weight $M_w$ of from $350 \times 10^3$ to $700 \times 10^3$. Such molecular weight can readily be determined by methods well known in the art such as by calculation from the intrinsic viscosity or from a gel permeation chromatography analysis. Another means of expressing the molecular weight is the Mooney viscosity and Mooney viscosities (ML-1+12 at 125°C) corresponding approximately to the above molecular ranges are from 20 to 70.

The low molecular weight isobutylene-containing polymers produced by the process of the present invention will have a molecular weight $M_w$ of from $25 \times 10^3$ to $150 \times 10^3$: a corresponding Mooney viscosity cannot be determined accurately on such low molecular weight polymers.

The polymer fed to the extruder may be supplied in any suitable form, such as strips or ribbons or as particles. The form of such polymer is not of significance to the present process. It is preferred to feed the polymer to the extruder as particles, in which case the polymer particles may be coated with a partitioning agent, such as talc, calcium carbonate or clay powder, to sustain the integrity of such particles and prevent them from re-agglomerating. The presence or absence of a partitioning agent on the polymer particles has no known influence on the present process.

A preferred extruder for use in the present process consists essentially of two screws rotatably mounted within the extruder barrel, a feed section, a reaction section, a volatiles removal section and an exit die. The two screws are co-rotating intermeshing screws, each screw being equipped with identical flights and extending throughout the extruder barrel from the feed section and terminating at the exit die. The screws are rotated by an external means such as an electric or a hydraulic drive having the capability of rotating the screws at preselected rates of rotation. The feed section of the extruder is a conventional hopper, whereby polymer can be fed into the extruder barrel and picked up by the screws, and a relatively short length of the extruder for the purpose of mixing the polymer supplied to the extruder and conveying it along the extruder. At a point downstream of the extruder and at a point closely adjacent to the junction of the feed section and the reaction section a gas feed port is attached to the extruder barrel such that it is in communication with the interior of the extruder barrel—thereby gas supplied from the gas feed port can be supplied to and mixed in with the polymer within the extruder barrel. In a most preferred configuration, the screws will have a short section of flights designed to prevent the back flow of polymer and gas, such flights being located at the downstream end of the feed section and upstream of the gas inlet port. The configuration of the flights within the feed section is such as to cause mixing and conveying. Immediately downstream of the feed section is the reaction section. Within the reaction section the flights on the screws are such as to cause shearing of the polymer—the design of such flights is well known in the art. While not fully understanding the mechanism involved, it is believed essential to create fresh polymer surface to react with the gas mixed with the polymer in the reaction section. Downstream of the reaction section is the volatiles removal section which extends downstream to the exit die. In a most preferred configuration, shortly downstream of the start of the volatiles removal section the screws will have a short section of flight configuration to create back pressure and prevent the unrestricted downstream flow of the gas mixed with the polymer. The volatiles removal section is equipped with a gas vent port attached to the extruder barrel located at a point closely adjacent to the junction of the reaction section and the volatiles removal section. The gas vent port is to allow a major proportion of the gas mixed with the polymer to be vented from the mixture and removed from the extruder and accordingly the gas vent port is in communication with the interior of the extruder barrel. In a most preferred configuration, downstream of the gas vent port the screws will have a short section of flight configuration designed to provide a seal to prevent back flow and to control the downstream flow of the polymer. Downstream of the gas vent port is a second vent port attached to the extruder barrel and communicating with the interior of the extruder barrel. This second vent port is also connected to a vacuum means so that any volatile materials present in the polymer may be removed through the vent port. Suitably, such a vacuum means may be capable of creating a vacuum of from 33 to 93 kPa (25 to 70 cms of mercury). In a most preferred configuration, downstream of the second vent port the screws will have a short section of flight configuration designed to provide a seal to prevent back flow and to prevent air or other gas entering the extruder and to control the downstream flow of the polymer. The screws within the volatiles removal section convey the polymer to and force it through the exit die and accordingly are equipped with mixing and conveying flights. The polymer from the die may be collected in any suitable means for use and/or packaging.

The extruder is maintained at a temperature of from 150° to 250°C, preferably from 180° to 230°C. It is preferred that the temperature be fairly uniform over the length of the extruder, and accordingly the extruder is preferably equipped with heating and cooling means for control of the temperature. Temperatures in excess of 250°C are not desirable for the process of this invention in order to minimize thermal degradation and the concurrent formation of carbon, very low molecular weight materials and other volatile components. In contrast, the present process is an oxidative degradation process operating at a relatively low temperature.

Within the extruder, the residence time for the polymer from the gas feed port to the gas vent port is from 0.5 to 3 minutes. Such residence time can be readily determined by, for example, injecting a liquid distinctively colored die with the polymer supplied to the feed section and determining the time for the colored polymer to appear at each of the two ports. The residence time is critical because if it is too low, it is not possible to achieve the desired reduction in molecular weight of the polymer and if it is too high, it is difficult to achieve control of the reduction in polymer molecular weight. The rate of rotation of the screws within the extruder may vary depending on the size of the extruder, the polymer throughput rate and the amount of gas being supplied to the extruder—the rate of rotation will be such as to achieve shearing in the reaction section and will generally be from as low as 30 rpm up to as high as 500 rpm, most preferably from 50 to 300 rpm.

The gas supplied to the gas feed line is a mixture of gases containing 5 to 30 per cent by volume of oxygen and one or more chemically inert gases, air being the preferred gas. It is supplied to the gas feed line at a pressure of from 108 to 343 kPa (1.1 to 3.5 kg/cm$^2$), preferably from 127 to 264 kPa (1.3 to 2.7 kg/cm$^2$). The rate at which the gas is supplied to the gas feed line depends on the polymer throughput rate and, accordingly, the rate in litres/hour of gas is from 10 to 500 times, preferably from 20 to 200 times, the polymer throughput rate in kg/hour. The presence of the oxygen-containing gas is essential in order to produce the desired product molecular weight at the temperatures used.

The low molecular weight isobutylene-containing polymer produced by the present process may be used in similar applications to those for the commercially available low molecular weight products directly polymerized to the various molecular weights desired by industry, such as plasticizers in rubber compounding, materials for the caulk and sealant industry and in certain food products.

The following Experiments 2—4, 6—8, 10, 11, 14—16, 18—20 and 22—24 illustrate the invention described herein. Experiments 1, 5, 9, 12, 13, 17, 21, 25 and 26 are comparative.

Experiments 1 to 26

The extruder was a co-rotating, intermeshing twin screw machine of length about 108 cm, the screws having a diameter of about 3 cm, with temperature heating and cooling means along the major length of the barrel. The screws are driven by a 15 hp variable speed motor and the screw speed was adjusted to 200 rpm. The feed section is equipped with an open hopper through which the polymer can be fed to the interior of the extruder. Dry air was supplied to the gas feed port at a pressure of approximately 137 kPa (1.4 kg/cm$^2$) through a rotameter to measure, at ambient conditions, the rate of flow of the gas. The second vent port was connected to a vacuum means operated at about 94 kPa (71 cm of mercury vacuum). The polymer was a butyl rubber containing approximately 98.4 mole per cent of isobutylene and approximately 1.6 mole per cent of isoprene, contained no antioxidant-type component and was supplied as ground particles of 0.5 to 2 cm particle size coated with either talc or calcium carbonate such that the coating formed approximately 30 to 40 parts by weight per 100 parts by weight of polymer. At a polymer throughout rate of 4.55 kg/hour and an extruder temperature of 160°C, the residence time of the polymer in the extruder from the gas feed port to the gas vent port was about 1.2 minutes, and at a polymer throughput rate of 6.8 kg/hour and an extruder temperature of 220°C, the residence time was about 0.9 minutes. The experimental data are shown in the Table.

In the Table, Experiments 1, 5, 9, 13, 17 and 21 are controls, with no air being supplied to the extruder, Experiment 25 is a control with nitrogen instead of air being supplied to the extruder, and Experiments 12 and 26 are controls being the original polymers prior to passage through the extruder. For Experiments 1—12, the particulate butyl was coated with talc and for Experiments 13—26 the particulate butyl was coated with calcium carbonate.

TABLE

| Experiment | Polymer feed rate kg/hour | Extruder temperature °C | Air injection rate l/hour | Molecular weight $M_w \times 10^3$ |
|---|---|---|---|---|
| 1* | 4.55 | 220 | 0 | 185 |
| 2 | 4.55 | 220 | 170 | 71.5 |
| 3 | 4.55 | 220 | 350 | 62 |
| 4 | 4.55 | 220 | 520 | 72 |
| 5* | 2.27 | 190 | 0 | 220 |
| 6 | 2.27 | 190 | 170 | 79 |
| 7 | 2.27 | 190 | 350 | 87 |
| 8 | 2.27 | 190 | 520 | 87 |
| 9* | 9.07 | 220 | 0 | 244 |
| 10 | 9.07 | 220 | 170 | 104.5 |
| 11 | 9.07 | 220 | 350 | 84 |
| 12* | — | — | — | 506 |
| 13* | 2.27 | 220 | 0 | 164.5 |
| 14 | 2.27 | 220 | 170 | 41.5 |
| 15 | 2.27 | 220 | 350 | 34.5 |
| 16 | 2.27 | 220 | 520 | 37.5 |
| 17* | 6.8 | 220 | 0 | 238 |
| 18 | 6.8 | 220 | 170 | 98 |
| 19 | 6.8 | 220 | 350 | 92 |
| 20 | 6.8 | 220 | 520 | 85 |
| 21* | 2.27 | 190 | 0 | 236 |
| 22 | 2.27 | 190 | 170 | 110 |
| 23 | 2.27 | 190 | 350 | 96 |
| 24 | 2.27 | 190 | 520 | 76 |
| 25* | 2.27 | 190 | 170 ($N_2$) | 225 |
| 26* | — | — | — | 514 |

*Comparative.

**Claims**

1. A process for the production of a low molecular weight isobutylene polymer which comprises feeding to an extruder an isobutylene-conjugated diolefin copolymer containing no more than 100 ppm of an antioxidant-type component and having a molecular weight $M_w$ of from $350\times10^3$ to $700\times10^3$ and reacting said polymer with gas within said extruder to produce said low molecular weight polymer having a molecular weight $M_w$ of from $25\times10^3$ to $150\times10^3$, characterized in that:

(a) said extruder consists essentially of a twin screw extruder mixer device capable of providing a high degree of interfacial contact between the viscous polymeric material and a gaseous phase and having a feed section, a reaction section and a volatiles removal section and being equipped with a gas feed port attached to and communicating with the interior of the extruder barrel at a point closely adjacent to the junction of the feed section and the reaction section, and being equipped with a gas vent port attached to and communicating with the interior of the extruder barrel at a point closely adjacent to the junction of the reaction section and the volatiles removal section and a second vent port also connected to a vacuum means attached to and communicating with the interior of said extruder barrel at a point with the volatiles removal section, the screws within the reaction section being equipped with shearing flights and within the feed section and the volatiles removal section being equipped with mixing and conveying flights,

(b) said polymer is conveyed through said extruder by said screws and is reacted in at least said reaction section with gas supplied from said gas feed port, gas is removed through said gas vent port and any volatile materials are removed through said second vent port,

(c) the extruder is maintained at a temperature of from 150 to 250°C,

(d) the residence time for the polymer in the extruder, between the gas feed port and the gas vent port, is from 0.5 to 3 minutes, and

(e) the gas is a mixture of gases containing from 5 to 30 v/v $O_2$ and one or more chemically inert gases, and is supplied to the gas feed port at a pressure of from 108 to 343 kPa (1.1 to 3.5 kg/cm²) and at a rate, in litres/hour, of from 10 to 500 times the polymer throughput rate in kg/hour.

2. A process according to claim 1, wherein the copolymer contains from 95 to 99.5 mole % isobutylene and from 0.5 to 5 mole % of a $C_4$—$C_6$ conjugated diolefin.

3. A process according to claim 1 or claim 2, wherein the conjugated diolefin is isoprene.

4. A process according to claim 1, wherein the copolymer contains from 98 to 99 mole % isobutylene and from 1 to 2 mole % isoprene.

5. A process according to any preceding claim, wherein the copolymer is fed to the extruder as particles.

6. A process according to claim 5, wherein the particles of copolymer are coated with a partitioning agent selected from talc, calcium carbonate and clay.

7. A process according to any preceding claim, wherein the temperature of the extruder is from 180 to 230°C.

8. A process according to any preceding claim, wherein the gas is supplied to the gas feed port at a rate in litres/hour of from 20 to 200 times the polymer throughput rate in kg/hour.

9. A process according to any preceding claim, wherein the pressure of the gas supplied to the gas feed port is from 127 to 264 kPa (1.3 to 2.7 kg/cm²).

10. A process according to any preceding claim, wherein the gas is air.

**Patentansprüche**

1. Verfahren zur Herstellung eines Isobutylen-Polymers mit niedrigem Molekulargewicht, umfassend das Einspeisen eines Isobutylen-konjugierten Diolefin-Copolymers, das nicht mehr als 100 ppm einer Komponente vom Typ eines Antioxidationsmittel enthält und ein Molekulargewicht $M_w$ von $350\times10^3$ bis $700\times10^3$ besitzt, in einen Extruder und das Umsetzen des Polymers mit Gas im Inneren des Extruders, wodurch das niedermolekulare Polymer erzeugt wird, das ein Molekulargewicht $M_w$ von $25\times10^3$ bis $150\times10^3$ besitzt, dadurch gekennzeichnet, daß

(a) der Extruder in wesentlichen aus einer Doppelschneckenextruder-Mischer-Vorrichtung besteht, die befähigt ist, einen hohen Grad der Grenzflächen-Berührung zwischen dem viskosen polymeren Material und der Gas-Phase zu bewirken, und einen Zuführungs-Abschnitt, einen Reaktions-Abschnitt und einen Abschnitt zur Entfernung der flüchtigen Stoffe besitzt und mit einem Gaseinleitungsstutzen ausgerüstet ist, der an dem Extruder-Zylinder an einer Stelle, die der Verbindung zwischen dem Zuführungs-Abschnitt und dem Reaktions-Abschnitt dicht benachbart ist, angebracht ist und mit dessen Innerem in Verbindung steht, und mit einem Gasableitungsstutzen, der an dem Extruder-Zylinder an einer Stelle, die der Verbindung zwischen dem Reaktions-Abschnitt und dem Abschnitt zur Entfernung der flüchtigen Stoffe dicht benachbart ist, angebracht ist und mit dessen Innerem in Verbindung steht, und einem zweiten Ableitungsstutzen, der auch mit einer Vakuum-Einrichtung, die an dem Extruder-Zylinder an einer Stelle bei dem Abschnitt zur Entfernung der flüchtigen Stoffe angebracht ist und mit dessen Innerem in Verbindung steht, ausgerüstet ist, wobei die Schnecken innerhalb des Reaktions-Abschnitts mit scherenden Gängen und innerhalb des Zuführungs-Abschnitts und des Abschnitts zur Entfernung der flüchtigen Stoffe mit mischenden und fördernden Gängen ausgerüstet sind,

(b) das Polymer mittels der Schnecken durch den Extruder gefördert und wenigstens in dem Reaktions-Abschnitt mit Gas umgesetzt wird, das aus dem Gaseinleitungsstutzen eingespeist wird, Gas durch den Gasableitungsstutzen entfernt wird und etwa vorhandene flüchtige Stoffe durch den zweiten Ableitungsstutzen entfernt werden,

(c) der Extruder auf einer Temperatur von 150°C bis 250°C gehalten wird,

(d) die Verweilzeit für das Polymer in dem Extruder, zwischen dem Gaseinleitungsstutzen und dem Gasableitungsstutzen 0,5 bis 3 Minuten beträgt,

(e) das Gas eine Gas-Mischung ist, die 5 bis 30 V/V O₂ und ein oder mehrere, chemisch inerte Gase enthält und dem Gaseinleitungsstutzen mit einem Druck von 108 bis 343 kPa (1,1 bis 3,5 kg/cm²) und mit einer Geschwindigkeit, in Litern/Stunde, des 10- bis 500fachen der Polymer-Durchsatzrate, in kg/h, zugeführt wird.

2. Verfahren nach Anspruch 1, worin das Copolymer 95 bis 99,5 Mol-% Isobutylen und 0,5 bis 5 Mol-% eines konjugierten C₄—C₆-Diolefins enthält.

3. Verfahren nach Anspruch 1 oder Anspruch 2, worin das konjugierte Diolefin Isopren ist.

4. Verfahren nach Anspruch 1, worin das Copolymer 98 bis 99 Mol-% Isobutylen und 1 bis 2 Mol-% Isopren enthält.

5. Verfahren nach irgendeinem vorhergehenden Anspruch, worin das Copolymer in Form von Teilchen in den Extruder eingespeist wird.

6. Verfahren nach Anspruch 5, worin die Teilchen des Copolymers mit einem Trennmittel, das aus Talkum, Calciumcarbonat und Ton ausgewählt ist, beschichtet sind.

7. Verfahren nach irgendeinem vorhergehenden Anspruch, worin die Temperatur des Extruders 180°C bis 230°C beträgt.

8. Verfahren nach irgendeinem vorhergehenden Anspruch, worin das Gas dem Gaseinleitungsstutzen mit einer Geschwindigkeit, in Litern/Stunde, des 20- bis 200fachen der Polymer-Durchsatzrate, in kg/h, zugeführt wird.

9. Verfahren nach irgendeinem vorhergehenden Anspruch, worin der Druck des dem Gaseinleitungsstutzen zugeführten Gases 127 bis 264 kPa (1,3 bis 2,7 kg/cm²) beträgt.

10. Verfahren nach irgendeinem vorhergehenden Anspruch, worin das Gas Luft ist.

**Revendications**

1. Procédé de production d'un polymère d'isobutylène de bas poids moléculaire, qui consiste à charger dans une extrudeuse un copolymère d'isobutylène et de dioléfine conjuguée ne contenant pas plus de 100 ppm d'un composant de type anti-oxydant et ayant un poids moléculaire $M_p$ de $350 \times 10^3$ à $700 \times 10^3$, et à faire réagir ledit polymère avec un gaz à l'intérieur de l'extrudeuse pour produire ledit polymère de bas poids moléculaire dont le poids moléculaire $M_p$ a une valeur de $25 \times 10^3$ à $150 \times 10^3$, caractérisé en ce que:

(a) l'extrudeuse consiste essentiellement en un dispositif mélangeur à extrudeuse à deux vis capable de créer un haut degré de contact interfacial entre la matière polymérique visqueuse et une phase gazeuse, et ayant une section d'alimentation, une section de réaction et une section d'élimination des matières volatiles, et étant équipé d'un conduit d'arrivée de gaz associé à, et en communication avec, l'intérieur du cylindre de l'extrudeuse en un point très proche de la jonction entre la section d'alimentation et la section de réaction, et étant équipé d'un conduit d'évacuation de gaz associé à, et communiquant avec, l'intérieur du cylindre de l'extrudeuse et un point très rapproché de la jonction entre la section de réaction et la section d'élimination des matières volatiles, et un second conduit d'évacuation également relié à un dispositif à vide associé à, et en communication avec, l'intérieur du cylindre d'extrudeuse en un point situé à l'intérieur de la section d'élimination des matières volatiles, les vis étant pourvues de filets de cisaillement à l'intérieur de la section de réaction et étant pourvues de filets de mélange et de transport à l'intérieur de la section d'alimentaiton et de la section d'élimination des matières volatiles,

(b) ledit polymère est transporté dans l'extrudeuse par lesdites vis et est amené à réagir au moins dans ladite section de réaction avec du gaz arrivant par le conduit d'alimentation en gaz, du gaz est déchargé par le conduit d'évacuation de gaz et toutes matières volatiles sont éliminées par le second conduit d'évacuation,

(c) l'extrudeuse est maintenue à une température de 150 à 250°C,

(d) la durée de séjour du polymère dans l'extrudeuse, entre le conduit d'arrivée de gaz et le conduit d'évacuation de gaz, va de 0,5 à 3 minutes, et

(e) le gaz est un mélange de gaz contenant 5 à 30% en volume d'oxygène et un ou plusieurs gaz chimiquement inertes, et il est amené au conduit d'alimentation en gaz à une pression de 108 à 343 kPa (1,1 à 3,5 kg/cm²) et à un débit, en litres/heure, de 10 à 500 fois le débit de polymère en kg/heure.

2. Procédé suivant la revendication 1, dans lequel le copolymère contient 95 à 99,5 moles % d'isobutylène et 0,5 à 5 moles % d'une dioléfine conjuguée en C₄ à C₆.

3. Procédé suivant la revendication 1 ou la revendication 2, dans lequel la dioléfine conjuguée est l'isoprène.

4. Procédé suivant la revendication 1, dans lequel le copolymère contient 98 à 99 moles % d'isobutylène et 1 à 2 moles % d'isoprène.

5. Procédé suivant l'une quelconque des revendications précédentes, dans lequel le copolymère est chargé dans l'extrudeuse sous forme de particules.

6. Procédé suivant la revendication 5, dans lequel les particules de copolymère sont revêtues d'un agent de séparation choisi entre le talc, le carbonate de calcium et l'argile.

7

7. Procédé suivant l'une quelconque des revendications précédentes, dans lequel la température de l'extrudeuse va de 180 à 230°C.

8. Procédé suivant l'une quelconque des revendications précédentes, dans lequel le gaz est amené au conduit d'arrivée de gaz à un débit en litres/heure de 20 à 200 fois le débit de polymère en kg/heure.

9. Procédé suivant l'une quelconque des revendications précédentes, dans lequel la pression du gaz arrivant au conduit d'amenée de gaz est de 127 à 264 kPa (1,3 à 2,7 kg/cm$^2$).

10. Procédé suivant l'une quelconque des revendications précédentes, dans lequel le gaz est l'air.